(19) Europäisches Patentamt
European Patent Office
Office européen des brevets

(11) EP 3 162 844 B1

(12) **EUROPEAN PATENT SPECIFICATION**

(45) Date of publication and mention of the grant of the patent:
**28.11.2018 Bulletin 2018/48**

(51) Int Cl.:
***C08K 3/34*** (2006.01) ***C08K 5/00*** (2006.01)
***C08L 23/12*** (2006.01)

(21) Application number: **15191367.0**

(22) Date of filing: **26.10.2015**

(54) **POLYPROPYLENE COMPOSITION COMPRISING A NUCLEATING COMPOSITION COMPRISING ALUMINOSILICATE AND AN ORGANIC NUCLEATING AGENT**

POLYPROPYLENZUSAMMENSETZUNG ENTHALTEND EINE KEIMBILDUNGSKOMPOSITION ENTHALTEND ALUMINIUMSILIKAT UND EIN ORGANISCHES NUKLEIERUNGSMTTEL

COMPOSITION DE POLYPROPYLÈNE COMPRENANT UNE COMPOSITION DE NUCLÉATION COMPRENANT UN SILICATE D'ALUMINIUM ET UN AGENT DE NUCLÉATION ORGANIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.05.2017 Bulletin 2017/18**

(73) Proprietor: **SABIC Global Technologies B.V.**
**4612 PX Bergen op Zoom (NL)**

(72) Inventors:
- **THELAKKADAN, Abdul, Salam**
  **6160 GA GELEEN (NL)**
- **SINGH, Rajendra , Kashinath**
  **6160 GA GELEEN (NL)**

(74) Representative: **Renkema, Jaap et al**
**IPecunia Patents B.V.**
**P.O. Box 593**
**6160 AN Geleen (NL)**

(56) References cited:
**WO-A1-2012/061041** **WO-A1-2014/202603**
**WO-A2-2014/091309** **CN-A- 104 558 848**
**JP-A- 2008 222 806** **US-A1- 2003 027 909**
**US-A1- 2008 004 384**

- **MINGLIANG DU ET AL: "Effects of halloysite nanotubes on kinetics and activation energy of non-isothermal crystallization of polypropylene", JOURNAL OF POLYMER RESEARCH, KLUWER ACADEMIC PUBLISHERS-CONSULTANTS BUREAU, NL, vol. 17, no. 1, 22 April 2009 (2009-04-22) , pages 109-118, XP019771955, ISSN: 1572-8935**
- **K. Prashantha ET AL: "Processing and characterization of halloysite nanotubes filled polypropylene nanocomposites based on a masterbatch route: effect of halloysites treatment on structural and mechanical properties", eXPRESS Polymer Letters, vol. 5, no. 4, 1 January 2011 (2011-01-01) , pages 295-307, XP055427419, ISSN: 1788-618X, DOI: 10.3144/expresspolymlett.2011.30**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 162 844 B1

## Description

The invention relates to a polypropylene composition comprising a nucleating composition.

Nucleating agents are chemical compounds or compositions that enable faster nucleation or a higher crystallization temperature of thermoplastic polymers, resulting in productivity gains during their processing and in improved mechanical and physical properties of articles made from such thermoplastics. These compounds provide nucleation sites for crystal growth during cooling of a thermoplastic molten composition. In polypropylenes, for example, a higher degree of crystallinity and more uniform crystalline structure is obtained by adding a nucleating agent such as talc and carboxylate salts, *e.g.* sodium benzoate. An overview of nucleating agents used in polypropylene-based compositions is given for example in Polym. Adv. Technol. 2007, 18, 685-695. However, it is commonly recognized that the use of nucleating agents is a highly unpredictable technology area. Small changes in a molecular structure of the nucleators can drastically alter the ability of a nucleating agent to nucleate effectively a polymer composition. There are still many unknowns regarding the effect of a nucleating agent on polymer morphology during (re-)crystallization of thermoplastics.

WO2014058521 mentions the use of a nucleating agent selected from the group consisting of sodium benzoate, talc, glycerol alkoxide salts, cyclic carboxylic acid salts, bicyclic carboxylic acid salts, glycerolates, and hexahydrophtalic acid salts in an adhesive composition comprising propylene.

WO2014202604 discloses a composition comprising polypropylene and a cyclic dicarboxylate salt compound and talc.

JP2008222806 discloses a composition comprising polypropylene, kaolin and an organic nucleating agent.

WO2012061041 mentions the use of halloysite (Dragonite) as a nucleating agent for polyethylene and polypropylene. WO2012061041 mentions that, as halloysite is present as a nucleating agent, there is no need to include other conventional nucleating agents in the compositions.

There is a demand for a propylene composition with a high crystallization temperature and improved mechanical properties such as the impact strength and the flexural modulus. A higher crystallization temperature means that the composition will crystallize with less cooling, as compared to a composition with a lower crystallization temperature. In a composition with a higher crystallization temperature, the cooling will go faster and hence release from the mold can also be done faster. Hence, shorter cycle times for the preparation of articles can be achieved.

It is an object of the invention to provide a propylene composition in which above-mentioned and/or other demands are met.

The invention provides a polypropylene composition comprising a polypropylene-based polymer and a nucleating composition comprising aluminosilicate clay and an organic nucleating agent,
wherein the organic nucleating agent is selected from the group consisting of bis(4-(tert-butyl)benzoato-O)hydroxyaluminium; sodium benzoate;
aluminum hydroxy-bis[2,4,8,10-tetrakis(1,1-dimethylethyl)-6-hydroxy-12H-dibenzo-[d,g]-dioxa-phosphocin-6-oxidato]containing nucleating agents, sodium-2,2'-methylene-bis(4,6-di-t-butylphenyl)phosphate, aluminium-hydroxy-bis[2,2'-methylene-bis(4,6-di-t-butylphenyl)-phosphate], sorbitol based nucleating agents and polymeric nucleating agents selected from the group consisting of vinylcycloalkane polymers and vinylalkane polymers;
a bicyclic dicarboxylate metal salt represented by formula (I)

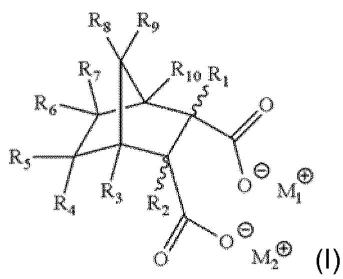
(I)

wherein $M_1$ and $M_2$ are independently selected from the group consisting of: sodium, calcium, strontium, lithium, zinc, magnesium, and monobasic aluminum; wherein $R_1$, $R_2$, $R_3$, $R_4$, $R_5$, $R_6$, $R_7$, $R_8$, $R_9$, and $R_{10}$ are independently selected from the group consisting of: hydrogen and $C_1$-$C_9$ alkyls; and further wherein any two adjacently positioned $R_3$-$R_{10}$ alkyl groups optionally may be combined to form a carbocyclic ring;
a metal salt of hexahydrophthalic acid represented by formula (II)

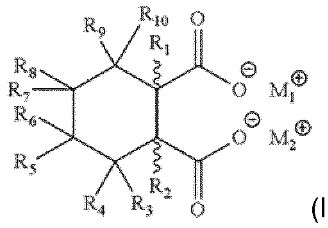

(II)

wherein $M_1$ and $M_2$ are the same or different, and may be combined into one cation, and are selected from at least one metal cation of calcium, strontium, lithium, and monobasic aluminum; and wherein $R_1$, $R_2$, $R_3$, $R_4$, $R_5$, $R_6$, $R_7$, $R_8$, $R_9$, and $R_{10}$ are either the same or different and are individually selected from the group consisting of hydrogen, $C_1$-$C_9$ alkyl, hydroxy, $C_1$-$C_9$alkoxy, $C_1$-$C_9$ alkyleneoxy, amine, and $C_1$-$C_9$ alkylamine, halogens, and phenyl,
and combinations thereof,
wherein the aluminosilicate clay is halloysite nanotubular clay and
wherein the amount of the aluminosilicate clay is 0.005-0.45 wt% with respect to the total composition.

It was surprisingly found that the combination of the aluminosilicate clay and the organic nucleating agent leads to a higher crystallization temperature and a good combination of mechanical properties. The use of a large amount of the aluminosilicate clay alone or the organic nucleating agent alone leads to a decrease in some of the mechanical properties and/or a higher cost. For example, the use of a large amount of organic nucleating agent tends to lead to an increase in the spherulite density which leads to an increase in stiffness and decrease in impact strength. Instead of using a large amount of the aluminosilicate clay or the organic nucleating agent, the combination of the nucleating agents is used according to the invention which allows obtaining a desired combination of mechanical properties. In particular, the flexural modulus is increased while maintaining the impact strength at a reasonable level.

Preferably, the amount of the organic nucleating agent with respect to the total weight of the aluminosilicate clay and the organic nucleating agent is 1-30 wt%, more preferably 3-25 wt%, more preferably 5-20 wt%, more preferably 8-15 wt%. In these ranges, a desired combination of mechanical properties is obtained. When said amount is 8-15 wt%, the flexural modulus and the impact strength are exceptionally high. Preferably, the amount of the nucleating composition in the propylene composition is 0.01-0.5 wt%, for example at least 0.02 wt%, at least 0.03 wt% or at least 0.05 wt%, and/or at most 0.3 wt%, at most 0.1 wt% or at most 0.08 wt%, with respect to the total propylene composition. In these ranges, a desired combination of mechanical properties is obtained while maintaining the cost efficiency.

Preferably, the amount of the aluminosilicate clay is at least 0.01 w%, at least 0.02 wt% or at least 0.05 wt%, and/or at most 0.3 wt%, at most 0.2 wt%, at most 0.1 wt% or at most 0.05 wt%, with respect to the total composition.

Preferably, the amount of the β-nucleating agent is 0.001-0.1 wt%, for example at least 0.001 w%, at least 0.002 wt% at least 0.003 wt%, at least 0.005 wt%, and/or at most 0.08 wt%, at most 0.05 wt%, at most 0.03 wt%, at most 0.02 wt% or at most 0.01 wt%, with respect to the total composition.

In particularly preferred embodiments, the amount of the aluminosilicate clay in the composition is 0.05-0.2 wt% and the amount of the organic nucleating agent in the composition is 0.005-0.02 wt%, with respect to the total composition. In these embodiments, particularly high flexural modulus can be obtained while the impact strength is maintained to a high level or even increased compared to the composition without the nucleating composition.

polypropylene-based polymer

The polypropylene-based polymer may be a propylene homopolymer or a propylene α-olefin copolymer including random copolymers and (multi)block copolymers. The copolymer may consist of at least 70 wt% of propylene and up to 30 wt% of α-olefin, preferably 5-10 wt% of α-olefin, based on the total weight of the propylene-based polymer. Preferably, the α-olefin in the propylene-α-olefin copolymer is selected from the group of α-olefins having 2 or 4-10 carbon atoms, for example ethylene, 1-butene, 1-pentene, 4-methyl-1-pentene, 1-hexen, 1-heptene or 1-octene, preferably ethylene.

heterophasic propylene copolymer

Preferably, the polypropylene-based polymer is a heterophasic propylene copolymer. Heterophasic propylene copolymers, also known as impact propylene copolymers or propylene block copolymers, are an important class of polymers due to their attractive combination of mechanical properties, such as impact strength over a wide temperature range and their low cost. These copolymers find a wide range of applications ranging from the consumer industry (for

example packaging and housewares), the automotive industry to electrical applications.

Heterophasic propylene copolymers are generally prepared in two or more than two reactors in series, by polymerization of propylene (or propylene and α-olefin) in the presence of a catalyst and subsequent polymerization of an ethylene-α-olefin mixture.

The resulting polymeric materials are heterophasic, but the specific morphology usually depends on the preparation method and monomer ratios used.

The heterophasic propylene copolymers employed in the process according to present invention can be produced using any conventional technique known to the skilled person, for example multistage process polymerization, such as bulk polymerization, gas phase polymerization, slurry polymerization, solution polymerization or any combinations thereof. Any conventional catalyst systems, for example, Ziegler-Natta or metallocene may be used. Such techniques and catalysts are described, for example, in WO06/010414; Polypropylene and other Polyolefins, by Ser van der Ven, Studies in Polymer Science 7, Elsevier 1990; WO06/010414, US4399054 and US4472524. Preferably, the heterophasic propylene copolymer is made using Ziegler-Natta catalyst.

The heterophasic propylene copolymer may be prepared by the process comprising

- polymerizing propylene and optionally α-olefin in the presence of a catalyst system to obtain the propylene-based matrix and
- subsequently polymerizing ethylene and α-olefin in the propylene-based matrix in the presence of a catalyst system to obtain the dispersed ethylene-a olefin copolymer.

These steps are preferably performed in different reactors. The catalyst systems for the first step and for the second step may be different or same.

The heterophasic propylene copolymer consists of a propylene-based matrix and a dispersed ethylene-α-olefin copolymer. The propylene-based matrix typically forms the continuous phase in the heterophasic propylene copolymer. The amounts of the propylene-based matrix and the dispersed ethylene-α-olefin copolymer may be determined by $^{13}C$-NMR, as well known in the art.

Preferably, the heterophasic propylene copolymer consists of

(a) a propylene-based matrix,
wherein the propylene-based matrix consists of a propylene homopolymer and/or a propylene-α-olefin copolymer consisting of at least 70 wt% of propylene and at most 30 wt% of α-olefin, based on the total weight of the propylene-based matrix and
wherein the propylene-based matrix is present in an amount of 60 to 95 wt% based on the total heterophasic propylene copolymer and
(b) a dispersed ethylene-α-olefin copolymer,
wherein the dispersed ethylene-α-olefin copolymer is present in an amount of 40 to 5 wt% based on the total heterophasic propylene copolymer and
wherein the sum of the total amount of propylene-based matrix and total amount of the dispersed ethylene-α-olefin copolymer in the heterophasic propylene copolymer is 100 wt%.

The propylene-based matrix consists of a propylene homopolymer and/or a propylene-α-olefin copolymer consisting of at least 70 wt% of propylene and up to 30 wt% of α-olefin, for example ethylene, for example consisting of at least 80 wt% of propylene and up to 20 wt% of α-olefin, for example consisting of at least 90 wt% of propylene and up to 10 wt% of α-olefin, based on the total weight of the propylene-based matrix.

Preferably, the α-olefin in the propylene-α-olefin copolymer is selected from the group of α-olefins having 2 or 4-10 carbon atoms, for example ethylene, 1-butene, 1-pentene, 4-methyl-1-pentene, 1-hexene, 1-heptene or 1-octene, and is preferably ethylene.

Preferably, the propylene-based matrix consists of a propylene homopolymer.

The propylene-based matrix is present in an amount of 60 to 95 wt%, for example 65 to 85 wt%, for example 70 to 85 wt%, for example 70 to 80 wt%, for example 65 to 75 wt% or 75 to 85 wt% based on the total heterophasic propylene copolymer.

The propylene-based matrix is preferably semi-crystalline, that means it is not 100% amorphous, nor 100% crystalline. For example, the propylene-based matrix is at least 40% crystalline, for example at least 50%, for example at least 60% crystalline and/or for example at most 80% crystalline, for example at most 70% crystalline. For example, the propylene-based matrix has a crystallinity of 60 to 70%. For purpose of the invention, the degree of crystallinity of the propylene-based matrix is measured using differential scanning calorimetry (DSC) according to ISO11357-1 and ISO11357-3 of 1997, using a scan rate of 10°C/min, a sample of 5mg and the second heating curve using as a theoretical standard for a 100% crystalline material 207.1 J/g.

Besides the propylene-based matrix, the heterophasic propylene copolymer also comprises a dispersed ethylene-α-olefin copolymer. The dispersed ethylene-α-olefin copolymer is also referred to herein as the 'dispersed phase'. The dispersed phase is embedded in the heterophasic propylene copolymer in a discontinuous form. The particle size of the dispersed phase is typically in the range of 0.05 to 2.0 microns, as may be determined by transmission electron microscopy (TEM).

The dispersed ethylene-α-olefin copolymer is present in an amount of 40 to 5 wt%, for example in an amount of 35 to 15 wt% based on the total heterophasic propylene copolymer, for example in an amount of at least 20 wt% and/or for example in an amount of at most 30 wt% based on the total heterophasic propylene copolymer.

In the heterophasic propylene copolymer in the composition of the invention, the sum of the total weight of the propylene-based matrix and the total weight of the dispersed ethylene-α-olefin copolymer is 100 wt%.

Preferably, the amount of ethylene in the ethylene- α-olefin copolymer is in the range of 20 to 65wt%, for example in the range of 40 to 60wt% based on the ethylene- α-olefin copolymer, for example the amount of ethylene in the ethylene- α-olefin copolymer is at least 30 wt% and/or for example at most 55wt% based on the ethylene- α-olefin copolymer.

In some embodiments, the amount of ethylene in the ethylene-α-olefin copolymer of the heterophasic propylene copolymer is from 10 to 45wt%. This leads to a high clarity of the composition according to the invention. More preferably, the amount of ethylene in the ethylene-α-olefin copolymer is 15-40 wt%, more preferably 15-30 wt%, more preferably 15-25 wt%, even more preferably 18 to 22wt%.

For example, the amount of ethylene in the ethylene-α-olefin copolymer is at least 10wt%, for example at least 15 wt%, for example at least 18 wt% and/or at most 40wt%, for example at most 30wt%, for example at most 25wt%, for example at most 22wt% based on the ethylene-α-olefin copolymer.

The α-olefin in the ethylene-α-olefin copolymer is preferably chosen from the group of α-olefins having 3 to 8 carbon atoms and any mixtures thereof, preferably the α-olefin in the ethylene-α-olefin copolymer is chosen from the group of α-olefins having 3 to 4 carbon atoms and any mixture thereof, more preferably the α-olefin is propylene, in which case the ethylene-α-olefin copolymer is ethylene-propylene copolymer. Examples of suitable α-olefins having 3 to 8 carbon atoms, which may be employed as ethylene comonomers to form the ethylene α-olefin copolymer include but are not limited to propylene, 1-butene, 1-pentene, 4-methyl-1-pentene, 1-hexen, 1-heptene and 1-octene.

Preferably, the amount of ethylene in the heterophasic propylene copolymer is 3-40 wt%, for example 5-10 wt%.

Preferably, the propylene-based matrix has a melt flow rate (before it is mixed with other components of the composition of the invention; $MFI_{PP}$) of at most 70 dg/min, preferably at most 50 dg/min, preferably at most 30 dg/min, most preferably at most 20 dg/min (ISO 1133, 230°C, 2.16 kg). This is advantageous for low emission of the final heterophasic propylene composition since the amount of low molecular weight oligomers increases with increasing the melt flow rate of the propylene-based matrix. Preferably, the propylene-based matrix has a melt flow rate of at least 0.1 dg/min, at least 0.5 dg/min, at least 1 dg/min, at least 5 dg/min or at least 10 dg/min (ISO 1133, 230°C, 2.16 kg).

Preferably, the dispersed ethylene α-olefin copolymer has a melt flow rate (before it is mixed with other components of the composition of the invention; $MFI_{EPR}$) of at least 0.001 dg/min, at least 0.01 dg/min, at least 0.1 dg/min, at least 0.3 dg/min, at least 0.7 dg/min, at least 1 dg/min, and/or for example at most 20 dg/min, at most 15 dg/min at most 10 dg/min, at most 5 dg/min or at most 3 dg/min. The MFI of the dispersed ethylene α-olefin copolymer ($MFI_{EPR}$) is calculated taking into account the MFI of the propylene-based matrix ($MFI_{PP)}$, the MFI of the heterophasic propylene copolymer (MFIheterophasic) and rubber content (RC) according to the following formula:

$$MFIEPR = 10\hat{}(\frac{Log\ MFIheterophasic - matrix\ content * Log\ MFIPP}{rubber\ content})$$

Preferably, the heterophasic propylene copolymer has a melt flow rate (MFIheterophasic) of at most 50 dg/min, at most 40 dg/min, at most 30 dg/min, at most 20 dg/minor at most 15 dg/min (ISO 1133, 230°C, 2.16 kg). Preferably, the melt flow rate of the heterophasic propylene copolymer is at least 0.1 dg/min, at least 0.5 dg/min, at least 1 dg/min, at least 5 dg/min or at least 10 dg/min (ISO 1133, 230°C, 2.16 kg).

The values of the MFI of the propylene-based matrix ($MFI_{PP}$) and the MFI of the dispersed ethylene-α-olefin elastomer ($MFI_{EPR}$) mentioned herein are understood as the values before the heterophasic propylene copolymer is mixed with the nucleating agents and optional components to obtain the composition according to the invention. The value of the MFI of the heterophasic propylene copolymer (MFI heterophasic) refers to the final MFI of the heterophasic propylene copolymer. To exemplify this:

In case the heterophasic propylene copolymer is not subjected to vis-breaking or shifting by melt-mixing with a peroxide, the MFIheterophasic is the original MFI value of the heterophasic propylene copolymer. In case the heterophasic propylene copolymer is subjected to vis-breaking or shifting by melt-mixing with a peroxide, the MFIheterophasic is the value of the heterophasic propylene copolymer after such vis-breaking or shifting.

aluminosilicate clay

The aluminosilicate clay is naturally occurring halloysite nanotubular (HNT) clay. Halloysite and HNT are described in detail in WO152061041.

HNT can contain other naturally occurring impurities in amounts as much as 50 wt% such as kaolinite or other minerals without affecting its performance as a nucleating agent in the invention.

organic nucleating agent

Examples of organic nucleating agent are well-known. Examples of preferred α-nucleating agent include bis(4-(tert-butyl)benzoato-O)hydroxyaluminium and sodium benzoate. Bis(4-(tert-butyl)benzoato-O)hydroxyaluminium is commercially available from GCH Technology Co., Ltd.

Other suitable examples of the organic nucleating agent are described e.g. in EP2599829, which describes organic α-nucleating agents. These organic α-nucleating agents are suitable for use as the organic nucleating agent in the present invention. For example, the organic nucleating agent may be aluminum hydroxy-bis[2,4,8,10-tetrakis(1,1-dimethylethyl)-6-hydroxy-12H-dibenzo-[d,g]-dioxa-phosphocin-6-oxidato] containing nucleating agents, sodium-2,2'-methylene-bis(4,6-di-t-butylphenyl)phosphate, aluminium-hydroxy-bis[2,2'-methylene-bis(4,6-di-t-butylphenyl)-phosphate], sorbitol based nucleating agents and polymeric nucleating agents selected from the group consisting of vinylcycloalkane polymers and vinylalkane polymers. The examples of organic α-nucleating agents are described in EP2599829.

Preferred examples of the organic nucleating agents include a bicyclic dicarboxylate metal salt represented by formula (I)

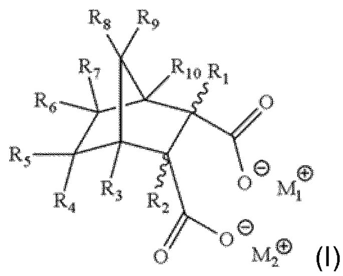
(I)

wherein $M_1$ and $M_2$ are independently selected from the group consisting of: sodium, calcium, strontium, lithium, zinc, magnesium, and monobasic aluminum; wherein $R_1$, $R_2$, $R_3$, $R_4$, $R_5$, $R_6$, $R_7$, $R_8$, $R_9$, and $R_{10}$ are independently selected from the group consisting of: hydrogen and $C_1$-$C_9$ alkyls; and further wherein any two adjacently positioned $R_3$-$R_{10}$ alkyl groups optionally may be combined to form a carbocyclic ring. In particular, suitable bicyclic dicarboxylate metal salts include disodium bicyclo[2.2.1]heptane-2,3-dicarboxylate, calcium bicyclo[2.2.1]heptane-2,3-dicarboxylate, and combinations thereof. One may employ HYPERFORM(R) HPN-68 or HPN-68 L from Milliken and Company of Spartanburg, S.C. HPN-68L is commercially sold, and comprises the disodium bicyclo[2.2.1]heptane-2,3-dicarboxylate, as shown below:

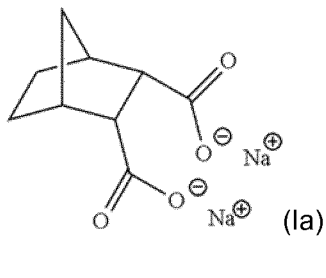
(Ia)

Other preferred suitable examples of the organic nucleating agents include a metal salt of hexahydrophthalic acid represented by formula (II)

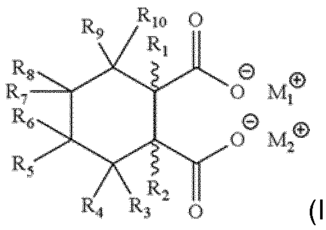

(II)

wherein $M_1$ and $M_2$ are the same or different, and may be combined into one cation, and are selected from at least one metal cation of calcium, strontium, lithium, and monobasic aluminum; and wherein $R_1$, $R_2$, $R_3$, $R_4$, $R_5$, $R_6$, $R_7$, $R_8$, $R_9$, and $R_{10}$ are either the same or different and are individually selected from the group consisting of hydrogen, $C_1$-$C_9$ alkyl, hydroxy, $C_1$-$C_9$alkoxy, $C_1$-$C_9$ alkyleneoxy, amine, and $C_1$-$C_9$ alkylamine, halogens, and phenyl. In one preferred embodiment, the $M_1$ and $M_2$ are combined as a calcium ion. Preferably, the compound of formula (II) is Ca HHPA, which refers to the following compound:

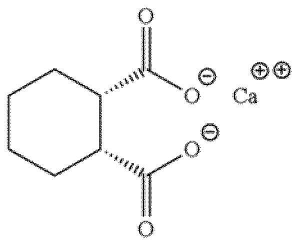

Ca HHPA (IIa)

A nucleating composition comprising Ca HHPA is commercially available from Milliken as HPN-20E, which consists of 66 wt% of Ca HHPA and 34 wt% of zinc stearate.

The organic nucleating agent may be any combination of the above.

Optional components

The composition according to the invention may optionally comprise at least one further component. Examples of the optional components are peroxides and other additives. The amount of the optional component is typically 0 to 30 wt% of the total of the composition.

Peroxides

In some embodiments, the composition according to the invention can be obtained by melt-mixing a peroxide with the propylene-based polymer and the nucleating agents. The composition obtained by the addition of a peroxide has a different (higher) MFI from the MFI of the propylene-based polymer (in particular heterophasic copolymer) used in preparing the composition. This step is also known in the art as vis-breaking or shifting. The term "visbreaking" is well known in the field of the invention. For example methods of visbreaking polypropylene have been disclosed in US 4,282,076 and EP 0063654. It is also possible to first melt-mix a peroxide with the propylene-based polymer, which changes the melt flow index of the heterophasic propylene copolymer, and then mix with the nucleating agents.

Examples of organic peroxides are well known and include dialkyl peroxides, e.g. dicumyl peroxides, peroxyketals, peroxycarbonates, diacyl peroxides, peroxyesters and peroxydicarbonates. Specific examples of these include benzoyl peroxide, dichlorobenzoyl peroxide, dicumyl peroxide, di-tert-butyl peroxide, 2,5-dimethyl-2,5-di(peroxybenzoato)-3-hexene, 1,4-bis(tert-butylperoxyisopropyl)benzene, lauroyl peroxide, tert-butyl peracetate, $\alpha,\alpha'$-bis(tert-butylperoxy)diisopropylbenzene (Luperco® 802), 2,5-dimethyl-2,5-di(tert-butylperoxy)-3-hexene, 2,5-dimethyl-2,5-di(tert-butylperoxy)-hexane, tert-butyl perbenzoate, tert-butyl perphenylacetate, tert-butyl per-sec-octoate, tert-butyl perpivalate, cumyl perpivalate and 3,6,9-Triethyl-3,6,9,-trimethyl-1,4,7-triperoxonane.

It can easily be determined by the person skilled in the art through routine experimentation how much peroxide should be used to obtain a composition having the desired melt flow index. This also depends on the half-life of the peroxide and on the conditions used for the melt-mixing, which in turn depend on the exact composition of the heterophasic propylene copolymer.

When a peroxide is used, the amount of peroxide will typically lie in the range of 0.02 to 0.5 wt% based on the

heterophasic propylene copolymer.

In some embodiments, the composition according to the invention is prepared without using a peroxide.

Additives

The composition according to the invention may further comprise additives. The additives may include stabilisers, *e.g.* heat stabilisers, anti-oxidants, UV stabilizers; colorants, like pigments and dyes; clarifiers; surface tension modifiers; lubricants; flame-retardants; mould-release agents; flow improving agents; plasticizers; anti-static agents; external elastomeric impact modifiers; blowing agents; inorganic fillers and reinforcing agents; and/or components that enhance interfacial bonding between polymer and filler, such as a maleated polypropylene.

The skilled person can readily select any suitable combination of additives and additive amounts without undue experimentation. The amount of the additives depends on their type and function and typically is of from 0 to about 30 wt%. The amount of the additives may e.g. be from about 1 to about 20 wt%; from about 2 to about 10 wt% or of from 3 to about 5 wt% based on the total composition.

The sum of all components added in the process of the invention to form the composition comprising the propylene-based polymer, the nucleating agents and the optional components should add up to 100% by weight.

Preferably, the total of the propylene-based polymer and the nucleating agents is at least 70 wt%, at least 80 wt%, at least 90 wt%, at least 95 wt%, at least 97 wt%, at least 98 wt%, at least 99 wt%, at least 99.5 wt%, at least 99.9 wt% or 100 wt% of the total composition.

Preferably, the composition according to the invention comprises an acid scavenger. The acid scavenger may be added to the composition according to the invention separately from the aluminosilicate clay and the organic nucleating agent. Additionally or alternatively, the acid scavenger may be added to the composition as a composition comprising the aluminosilicate clay and the acid scavenger or a composition comprising the organic nucleating agent and the acid scavenger. Preferably, the amount of the acid scavenger in the composition is 0.01- 1 wt%. Any known acid scavenger is suitable and may e.g. be selected from the group consisting of hydrotalcite, calcium stearate, sodium stearate, zinc stearate, magnesium stearate and combinations thereof.

The invention further relates to a composition comprising no or little amount of an inorganic filler. The amount of the inorganic filler in the composition according to the invention may be at most 5 wt%, at most 3 wt%, at most 1 wt%, at most 0.5 wt%, at most 0.1 wt% or 0 wt%.

The invention further relates to a composition comprising no or little amount of a polypropylene homopolymer as an additional component to the propylene-based polymer and the nucleating agents. The amount of the polypropylene homopolymer in the composition according to the invention may be at most 5 wt%, at most 3 wt%, at most 1 wt%, at most 0.5 wt%, at most 0.1 wt% or 0 wt%.

In some embodiments, the composition according to the invention comprises glass beads or glass fibers as an additional component to the propylene-based polymer and the nucleating agents. The amount of the glass beads or glass fibers may e.g. be 5 to 30 wt%, e.g. 10 to 25 wt%, e.g. 15 to 20 wt%. The invention further relates to a composition comprising no or little amount of glass beads or glass fibers as an additional component to the propylene-based polymer and the nucleating agents. The amount of the glass beads or glass fibers may e.g. be at most 5 wt%, at most 3 wt%, at most 1 wt%, at most 0.5 wt%, at most 0.1 wt% or 0 wt%.

In some embodiments, the composition according to the invention comprises impact modifiers such as ethylene-$\alpha$-olefin copolymer as an additional component to the propylene-based polymer and the nucleating agents. The amount of the impact modifiers may e.g. be 5 to 30 wt%, e.g. 10 to 25 wt%, e.g. 15 to 20 wt%. The invention further relates to a composition comprising no or little amount of impact modifiers such as ethylene-$\alpha$-olefin copolymer as an additional component to components to the propylene-based polymer and the nucleating agents. The amount of the impact modifiers such as ethylene-$\alpha$-olefin copolymer in the composition according to the invention may be at most 5 wt%, at most 3 wt%, at most 1 wt%, at most 0.5 wt%, at most 0.1 wt% or 0 wt%.

Properties

Preferably, the composition according to the invention has a melt flow rate of at most 50 dg/min, at most 40 dg/min, at most 30 dg/min, at most 20 dg/min or at most 15 dg/min (ISO 1133, 230°C, 2.16 kg). Preferably, the melt flow rate of the composition according to the invention is at least 0.1 dg/min, at least 0.5 dg/min, at least 1 dg/min, at least 5 dg/min or at least 10 dg/min (ISO 1133, 230°C, 2.16 kg). Preferably, the composition according to the invention has a melt flow rate of 5-50 or 10-50 dg/min (ISO 1133, 230°C, 2.16 kg).

The invention further provides a process for the preparation of the composition according to the invention, comprising melt mixing the polypropylene-based polymer and the nucleating composition.

The invention further provides an article comprising the composition according to the invention. Suitable examples of the article include a consumer appliance such as housings for household, electrical appliances such as

refrigerator interiors, washing machine barrel, and garden power tools.

Preferably, the article according to the invention has an Izod impact strength at 23°C measured by ASTM D256 (test geometry: 65*12.7*3.2 mm, notch 45°, radius 0.25 mm, parallel orientation) of at least 45 J/m, more preferably at least 46 J/m, more preferably more preferably at least 47 J/m, more preferably at least 48 J/m, more preferably at least 49 J/m, more preferably at least 50 J/m.

Preferably, the article according to the invention has a Flexural Strength according to ASTM D79 of at least 33 MPa, more preferably at least 35 MPa, more preferably at least 37 MPa, more preferably at least 39 MPa.

Preferably, the article according to the invention has a Tensile Strength at Yield (%) measured by ASTM D638 of at least 26%, more preferably at least 27%.

Preferably, the article according to the invention has a Tensile Strength at Break (%) measured by ASTM D790 of at least 14%, more preferably at least 15%, more preferably at least 16%.

Preferably, the article according to the invention has a Tensile Elongation at Yield (%) measured by ASTM D790 of at least 4%, more preferably at least 4.5%.

Preferably, the article according to the invention has a Tensile Elongation at Break (%) measured by ASTM D790 of at least 30%, more preferably at least 35%, more preferably at least 36%.

Preferably, the article according to the invention has a Flexural Modulus (MPa) measured by ASTM D638 of at least 1100 MPa, more preferably at least 1200 MPa, more preferably at least 1250 MPa.

Preferably, the article according to the invention has a Young's Modulus (MPa) measured by ASTM D790 of at least 1500 MPa, more preferably at least 1550 MPa, more preferably at least 1600 MPa.

Preferably, the composition according to the invention has a crystallization temperature $T_c$ of at least 122 °C, more preferably at least 125 °C, more preferably at least 128 °C, wherein Tc is determined using Differential Scanning Calorimetry according to ASTM D 3418-08 using a scan rate of 10 degrees C/min from 40 to 200°C on a sample of 10mg and using the second heating cycle.

Preferably, the article according to the invention has
an Izod impact strength at 23°C measured by ASTM D256 (test geometry: 65*12.7*3.2 mm, notch 45°, radius 0.25 mm, parallel orientation) of at least 45 J/m and a Flexural Modulus measured by ASTM D638 of at least 1100 MPa, wherein the composition has a crystallization temperature $T_c$ of at least 122 °C, wherein Tc is determined using Differential Scanning Calorimetry according to ASTM D 3418-08 using a scan rate of 10 degrees C/min from 40 to 200°C on a sample of 10mg and using the second heating cycle.

More preferably, the article according to the invention has
an Izod impact strength at 23°C measured by ASTM D256 (test geometry: 65*12.7*3.2 mm, notch 45°, radius 0.25 mm, parallel orientation) of at least 46 J/m and a Flexural Modulus measured by ASTM D638 of at least 1200 MPa, wherein the composition has a crystallization temperature $T_c$ of at least 128 °C, wherein Tc is determined using Differential Scanning Calorimetry according to ASTM D 3418-08 using a scan rate of 10 degrees C/min from 40 to 200°C on a sample of 10mg and using the second heating cycle.

More preferably, the article according to the invention has
an Izod impact strength at 23°C measured by ASTM D256 (test geometry: 65*12.7*3.2 mm, notch 45°, radius 0.25 mm, parallel orientation) of at least 47 J/m and a Flexural Modulus measured by ASTM D638 of at least 1200 MPa, wherein the composition has a crystallization temperature $T_c$ of at least 128 °C, wherein Tc is determined using Differential Scanning Calorimetry according to ASTM D 3418-08 using a scan rate of 10 degrees C/min from 40 to 200°C on a sample of 10mg and using the second heating cycle.

The invention is now elucidated by way of the following examples.

**Materials**

propylene-based polymer:

The propylene-based polymer was a heterophasic propylene copolymer comprising a matrix phase of a propylene homopolymer and a dispersed phase of propyleneethylene copolymer and has the following properties:

| | polymer 1 |
|---|---|
| RC: amount of dispersed phase (w%) | 15 |
| RCC2: amount of ethylene in dispersed phase (w%) | 47-53 |
| amount of ethylene in copolymer (w%) | 7-8 |
| MFR (g/10min) | 21 |

nucleating agents:

Dragonite (halloysite nanotubular clay from Applied Minerals)
HPN-20E (Zinc stearate 34 wt%, 1,1-Cyclohexanedicarboxylic acid, Calcium salt 66 wt% from Milliken),

The heterophasic propylene copolymer was mixed with the nucleating agents and additives which are typically used in propylene compositions such as thermal stabilizers to prevent thermo-oxidative degradation. The compositions were prepared using a co-rotating twin screw extruder [Krauss Maffei co-rotating twin screw extruder, 25 mm screw dia with L/D of 56] to obtain pellets.

All experiments were performed at 200 RPM and a throughput of 30 kg/hour. The temperature zones 1 to 12 were set on: 35°C, 200°C, 200°C, 200°C, 200°C, 200°C, 200°C, 220°C, 220°C, 220°C, 220°C and 220°C. The adaptor temperature, the die temperature and the water tank temperature was 230°C, 240°C and 40°C respectively.

Impact strength was measured by Izod test (notched Izod Impact) according to ASTM D256. Samples were obtained by injection molding specimens in 65*12.7*2 mm dimension in the parallel orientation of moulding with 45° notch, radius 0.25mm. The test temperatures were 0 °C and 23 °C.
Flexural Modulus (FM) was measured by ASTM D638.
Young's Modulus (YM) was measured by ASTM D790.
Flexural strength (FS) was measured by ASTM D790.
Tensile Strength at Yield (TS at Y) was measured by ASTM D638.
Tensile Strength at Break (TS at B) was measured by ASTM D790.
Tensile Elongation at Yield (TE at Y) was measured by ASTM D790.
Tensile Elongation at Break (TE at B) was measured by ASTM D790.

The melt temperature $T_m$ and the crystallization temperature $T_c$ were determined using Differential Scanning Calorimetry according to ASTM D 3418-08 using a scan rate of 10 degrees C/min from 40 to 200°C on a sample of 10mg and using the second heating cycle.

The degree of crystallinity (Xc) was measured according to ASTM D3418-08 considering the standard heat of fusion of PP as 207.1 J/g. All experiments were performed in ambient air.

The compositions used in the examples and test results are shown in Tables 1-3.

Table 1

| | nucleating composition | Izod Impact (J/m) | FM (MPa) | YM (MPA) | FS (MPa) |
|---|---|---|---|---|---|
| CEx A | none | 50.56 | 1054 | 1451 | 33.84 |
| CEx B | 900 ppm sodium benzoate | 45.69 | 1299 | 1632 | 39.12 |
| CEx C | 1000 ppm dragonite | 47.52 | 1058 | 1374 | 34.02 |
| CEx D | 100 ppm HPN-20E | 46.15 | 1216 | 1516.8 | 37.58 |
| CEx E | 250 ppm HPN-20E | 46.71 | 1408 | 1688.6 | 36.48 |
| Ex 1 | 500 ppm dragonite and 100 ppm HPN-20E | 46.96 | 1214 | 1668 | 37.78 |
| Ex 2 | 1000 ppm dragonite and 100 ppm HPN-20E | 51.52 | 1308 | 1580 | 39.34 |

Table 2

| | nucleating composition | TS at Y (%) | TS at B (%) | TE at Y (%) | TE at B (%) |
|---|---|---|---|---|---|
| CEx A | none | 26.12 | 14.24 | 5.2 | 30.6 |
| CEx B | 900 ppm sodium benzoate | 27.54 | 16.3 | 4.72 | 35 |
| CEx C | 1000 ppm dragonite | 26.16 | 14.98 | 5.52 | 33.6 |
| CEx D | 100 ppm HPN-20E | 27.3 | 16.34 | 4.8 | 33.4 |
| CEx E | 250 ppm HPN-20E | 27.5 | 16.54 | 4.7 | 37.8 |
| Ex 1 | 500 ppm dragonite and 100 ppm HPN-20E | 27.7 | 16.5 | 4.74 | 38.8 |
| Ex 2 | 1000 ppm dragonite and 100 ppm HPN-20E | 27.22 | 16.3 | 4.72 | 36.2 |

Table 3

| | nucleating composition | Tc (°C) | Tm (°C) | Xc (%) |
|---|---|---|---|---|
| CEx A | none | 121.2 | 165.9 | 38.8 |
| CEx B | 900 ppm sodium benzoate | 127.3 | 166.4 | 42.9 |
| CEx C | 1000 ppm dragonite | 120.4 | 164.7 | 41.2 |
| CEx D | 100 ppm HPN-20E | 128.1 | 166.5 | 45.5 |
| CEx E | 250 ppm HPN-20E | 129.7 | 166.5 | 45.4 |
| Ex 1 | 500 ppm dragonite and 100 ppm HPN-20E | 129.2 | 166.3 | 45.2 |
| Ex 2 | 1000 ppm dragonite and 100 ppm HPN-20E | 129.1 | 166.5 | 43.8 |

As can be understood from Tables 1-3, the combination of the use of aluminosilicate clay and an organic nucleating agent leads to a substantial increase in Tc and a good combination of mechanical properties. In particular, the impact strength has been maintained to an acceptable level or even higher while the flexural modulus was substantially increased. Such trend cannot be seen when only aluminosilicate clay was used (CEx C: Tc is very low and flexural modulus is not high). Comparison of Ex 1 and 2 shows that a higher amount of the aluminosilicate clay leads to a higher impact strength while the flexural modulus decreases. Since the compositions according to the invention have a higher crystallization temperature, the composition will crystallize at a higher temperature and articles can be released from a mould faster. Hence, shorter cycle times for the preparation of articles can be achieved.

## Claims

1. A polypropylene composition comprising a polypropylene-based polymer and a nucleating composition comprising aluminosilicate clay and an organic nucleating agent,
wherein the organic nucleating agent is selected from the group consisting of bis(4-(tert-butyl)benzoato-O)hydroxyaluminium; sodium benzoate;
aluminum hydroxy-bis[2,4,8,10-tetrakis(1,1-dimethylethyl)-6-hydroxy-12H-dibenzo-[d,g]-dioxa-phosphocin-6-oxidato] containing nucleating agents, sodium-2,2'-methylene-bis(4,6-di-t-butylphenyl)phosphate, aluminium-hydroxy-bis[2,2'-methylene-bis(4,6-di-t-butylphenyl)-phosphate], sorbitol based nucleating agents and polymeric nucleating agents selected from the group consisting of vinylcycloalkane polymers and vinylalkane polymers;
a bicyclic dicarboxylate metal salt represented by formula (I)

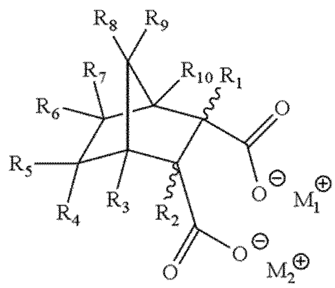

(I)

wherein $M_1$ and $M_2$ are independently selected from the group consisting of: sodium, calcium, strontium, lithium, zinc, magnesium, and monobasic aluminum; wherein $R_1$, $R_2$, $R_3$, $R_4$, $R_5$, $R_6$, $R_7$, $R_8$, $R_9$, and $R_{10}$ are independently selected from the group consisting of: hydrogen and $C_1$-$C_9$ alkyls; and further wherein any two adjacently positioned $R_3$-$R_{10}$ alkyl groups optionally may be combined to form a carbocyclic ring; a metal salt of hexahydrophthalic acid represented by formula (II)

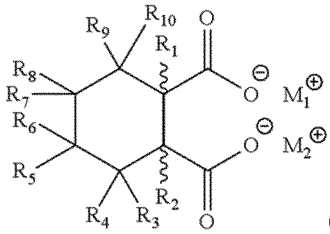

(II)

wherein $M_1$ and $M_2$ are the same or different, and may be combined into one cation, and are selected from at least one metal cation of calcium, strontium, lithium, and monobasic aluminum; and wherein $R_1$, $R_2$, $R_3$, $R_4$, $R_5$, $R_6$, $R_7$, $R_8$, $R_9$, and $R_{10}$ are either the same or different and are individually selected from the group consisting of hydrogen, $C_1$-$C_9$ alkyl, hydroxy, $C_1$-$C_9$alkoxy, $C_1$-$C_9$ alkyleneoxy, amine, and $C_1$-$C_9$ alkylamine, halogens, and phenyl, and combinations thereof,
wherein the aluminosilicate clay is naturally occurring halloysite nanotubular clay and wherein the amount of the aluminosilicate clay is 0.005-0.45 wt% with respect to the total composition.

2. The composition according to any one of the preceding claims, wherein the organic nucleating agent is Ca salt of hexahydrophthalic acid.

3. The composition according to any one of the preceding claims, wherein the amount of the nucleating composition in the propylene composition is 0.01-0.5 wt%.

4. The composition according to any one of the preceding claims, wherein the amount of the organic nucleating agent with respect to the total weight of the aluminosilicate clay and the organic nucleating agent is 1-30 wt%.

5. The composition according to any one of the preceding claims, wherein the amount of the organic nucleating agent in the composition is 0.001-0.1 wt% with respect to the total composition.

6. The composition according to any one of the preceding claims, wherein the polypropylene-based polymer is a heterophasic propylene copolymer consisting of

(a) a propylene-based matrix,
wherein the propylene-based matrix consists of a propylene homopolymer and/or a propylene- $\alpha$-olefin copolymer consisting of at least 70 wt% of propylene and at most 30 wt% of $\alpha$-olefin, based on the total weight of the propylene-based matrix and
wherein the propylene-based matrix is present in an amount of 60 to 95 wt% based on the total heterophasic propylene copolymer and
(b) a dispersed ethylene-$\alpha$-olefin copolymer,
wherein the dispersed ethylene-$\alpha$-olefin copolymer is present in an amount of 40 to 5 wt% based on the total heterophasic propylene copolymer and
wherein the sum of the total amount of propylene-based matrix and total amount of the dispersed ethylene-$\alpha$-olefin copolymer in the heterophasic propylene copolymer is 100 wt%.

7. The composition according to any one of the preceding claims, wherein the $\alpha$-olefin in the propylene-$\alpha$-olefin copolymer is selected from the group of $\alpha$-olefins having 2 or 4-10 carbon atoms, for example ethylene, 1-butene, 1-pentene, 4-methyl-1-pentene, 1-hexen, 1-heptene or 1-octene, preferably ethylene.

8. The composition according to any one of the preceding claims, wherein the composition has a melt flow rate of 10-50 dg/min (ISO 1133, 230°C, 2.16 kg).

9. A process for the preparation of the composition according to any one of the preceding claims, comprising melt mixing the polypropylene-based polymer and the nucleating composition.

10. An article comprising the composition of any one of claims 1-8.

11. The article according to claim 10, wherein the article is a consumer appliance such as housings for household, electrical appliances such as refrigerator interiors, washing machine barrels and garden power tools.

**12.** The article according to claim 10 or 11, wherein the article has an Izod impact strength of at least 45 kJ/m2 as determined according to ASTM D256 and a flexural modulus of at least 1200 MPa as determined by ASTM D 790.

## Patentansprüche

**1.** Polypropylenzusammensetzung, die ein Polymer auf Polypropylenbasis und eine organische keimbildende Zusammensetzung umfasst, die Aluminosilikat-Ton und einen organischen Keimbildner umfasst,
wobei der organische Keimbildner ausgewählt ist aus der Gruppe, bestehend aus Bis(4-(tert-butyl)benzoato-O)hydroxyaluminium; Natriumbenzoat; Aluminiumhydroxy-bis[2,4,8,10-tetrakis(1,1-dimethylethyl)-6-hydroxy-12H-dibenzo-[d,g]-dioxa-phosphocin-6-oxidato] enthaltenden Keimbildnern, Natrium-2,2'-Methylen-bis(4,6-di-t-butylphenyl)phosphat, Aluminium-hydroxy-bis [2,2'-methylen-bis(4,6-di-t-butylphenyl)phosphat], Keimbildnern auf Sorbitolbasis und polymeren Keimbildnern ausgewählt aus der Gruppe, bestehend aus Vinylcycloalkanpolymeren und Vinylalkanpolymeren;
ein bicyclisches Dicarboxylatmetallsalz, dargestellt durch Formel (I)

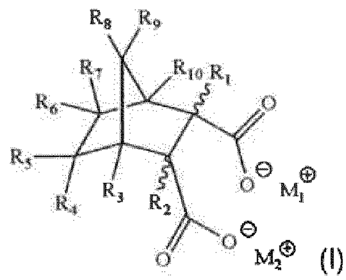

(I)

wobei $M_1$ und $M_2$ unabhängig ausgewählt sind aus der Gruppe bestehend aus: Natrium, Calcium, Strontium, Lithium, Zink, Magnesium und einbasischem Aluminium; wobei $R_1$, $R_2$, $R_3$, $R_4$, $R_5$, $R_6$, $R_7$, $R_8$, $R_9$ und $R_{10}$ unabhängig ausgewählt sind aus der Gruppe, bestehend aus: Wasserstoff und $C_1$-$C_9$ Alkylen; und wobei ferner zwei beliebige benachbart angeordnete $R_3$-$R_{10}$ Alkylgruppen wahlweise verbunden sein können, um einen carbocyclischen Ring zu bilden;
ein Metallsalz von Hexahydrophthalsäure, dargestellt durch Formel (II)

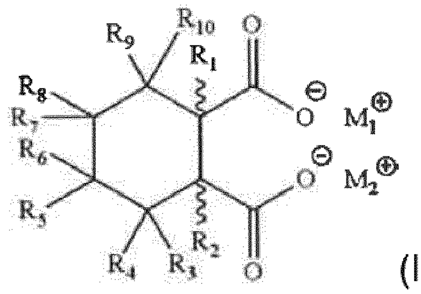

(II)

wobei $M_1$ und $M_2$ gleich oder verschieden sind und zu einem Kation verbunden sein können,
und ausgewählt sind aus mindestens einem Metallkation von Calcium, Strontium, Lithium und einbasischem Aluminium; und wobei $R_1$, $R_2$, $R_3$, $R_4$, $R_5$, $R_6$, $R_7$, $R_8$, $R_9$ und $R_{10}$ entweder gleich oder verschieden sind und einzeln ausgewählt sind aus der Gruppe, bestehend aus Wasserstoff, $C_1$-$C_9$ Alkyl, Hydroxy, $C_1$-$C_9$ Alkoxy, $C_1$-$C_9$ Alkylenoxy, Amin und $C_1$-$C_9$ Alkylamin, Halogenen und Phenyl und Kombinationen davon, wobei der Aluminosilikat-Ton natürlich vorkommender Halloysit-Nanoröhren-Ton ist und wobei die Menge des Aluminosilikat-Tons 0,005-0,45 Gew.-% in Bezug auf die Gesamtzusammensetzung beträgt.

**2.** Zusammensetzung nach einem der vorherigen Ansprüche, wobei der organische Keimbildner ein Ca-Salz von Hexahydrophthalsäure ist.

**3.** Zusammensetzung nach einem der vorherigen Ansprüche, wobei die Menge der keimbildende Zusammensetzung in der Propylenzusammensetzung 0,01 bis 0,5 Gew.-% beträgt.

4. Zusammensetzung nach einem der vorherigen Ansprüche, wobei die Menge des organischen Keimbildners in Bezug auf das Gesamtgewicht des Aluminosilikat-Tons und des organischen Keimbildners 1-30 Gew.-% beträgt.

5. Zusammensetzung nach einem der vorherigen Ansprüche, wobei die Menge des organischen Keimbildners in der Zusammensetzung 0,001-0,1 Gew.-% beträgt, bezogen auf die Gesamtzusammensetzung.

6. Zusammensetzung nach einem der vorherigen Ansprüche, wobei das Polymer auf Polypropylenbasis ein heterophasisches Propylen-Copolymer ist, bestehend aus

(a) einer Matrix auf Propylenbasis,
wobei die Matrix auf Propylenbasis aus einem Propylenhomopolymer und/oder einem Propylen-α-Olefin-Copolymer besteht, das aus mindestens 70 Gew.-% Propylen und höchstens 30 Gew.-% α-Olefin besteht, bezogen auf das Gesamtgewicht der Matrix auf Propylenbasis und
wobei die Matrix auf Propylenbasis in einer Menge von 60 bis 95 Gew.-% vorliegt, bezogen auf das gesamte heterophasische Propylencopolymer und
(b) ein dispergiertes Ethylen-α-Olefin-Copolymer,
wobei das dispergierte Ethylen-α-Olefin-Copolymer in einer Menge von 40 bis 5 Gew.-% vorliegt, bezogen auf das gesamte heterophasische Propylencopolymer und
wobei die Summe der Gesamtmenge der Matrix auf Propylenbasis und der Gesamtmenge des dispergierten Ethylen-α-Olefin-Copolymers in dem heterophasischen Propylencopolymer 100 Gew.-% beträgt.

7. Die Zusammensetzung nach einem der vorherigen Ansprüche, wobei das α-Olefin in dem Propylen-α-Olefin-Copolymer ausgewählt ist aus der Gruppe von α-Olefinen mit 2 oder 4-10 Kohlenstoffatomen, zum Beispiel Ethylen, 1-Buten, 1-Penten, 4-Methyl-1-penten, 1-Hexen, 1-Hepten oder 1-Octen, vorzugsweise Ethylen.

8. Zusammensetzung nach einem der vorherigen Ansprüche, wobei die Zusammensetzung eine Schmelzflussrate von 10-50 dg/min (ISO 1133, 230 °C, 2,16 kg) aufweist.

9. Verfahren zur Herstellung der Zusammensetzung nach einem der vorherigen Ansprüche, welches das Schmelzmischen des Polymers auf Polypropylenbasis und der keimbildende Zusammensetzung umfasst.

10. Gegenstand, der die Zusammensetzung nach einem der Ansprüche 1-8 umfasst.

11. Gegenstand nach Anspruch 10, wobei der Gegenstand ein Verbrauchergerät ist, wie etwa Gehäuse für elektrische Haushaltsgeräte, wie etwa Kühlschrankinnenräume,
Waschmaschinentrommeln und Gartenelektrowerkzeuge.

12. Gegenstand nach Anspruch 10 oder 11, wobei der Gegenstand eine Izod-Schlagfestigkeit von mindestens 45 $kJ/m^2$ aufweist, bestimmt nach ASTM D256, und ein Elastizitätsmodul von mindestens 1200 MPa, bestimmt nach ASTM D 790.

## Revendications

1. Composition de polypropylène comprenant un polymère à base de polypropylène et une composition de nucléation comprenant une argile d'aluminosilicate et un agent de nucléation organique,
dans laquelle l'agent de nucléation organique est choisi dans le groupe constitué par
le bis(4-(tert-butyl)benzoato-O)hydroxyaluminium ; le benzoate de sodium ; les agents de nucléation contenant de l'aluminium hydroxy-bis[2,4,8,10-tétrakis(1,1-diméthyléthyl)-6-hydroxy-12H-dibenzo[d,g]-dioxa-phosphocine-6-oxydato], le sodium-2,2'-méthylène-bis(4,6-di-t-butylphényl)phosphate, l'aluminium-hydroxy-bis[2,2'-méthylène-bis(4,6-di-t-butylphényl)-phosphate], les agents de nucléation à base de sorbitol et des agents de nucléation polymères choisis dans le groupe constitué par les polymères vinylcycloalcane et les polymères vinylalcane ;
un sel métallique de dicarboxylate bicyclique représenté par la formule (I)

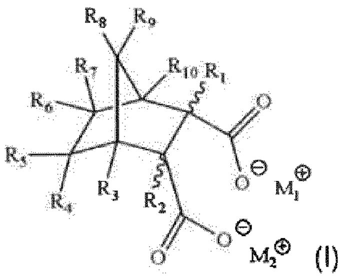

(I)

dans laquelle $M_1$ et $M_2$ sont choisis indépendamment dans le groupe constitué par :

le sodium, le calcium, le strontium, le lithium, le zinc, le magnésium et l'aluminium monobasique ; dans laquelle $R_1$, $R_2$, $R_3$, $R_4$, $R_5$, $R_6$, $R_7$, $R_8$, $R_9$ et $R_{10}$ sont choisis indépendamment dans le groupe constitué par : d'hydrogène et des alkyles en $C_1$ - $C_9$ ; et en outre dans laquelle l'un quelconque de deux groupes $R_3$ - $R_{10}$ positionnés de manière adjacente peuvent éventuellement être combinés pour former un cycle carbocyclique ;
un sel métallique d'acide hexahydrophtalique représenté par la formule (II)

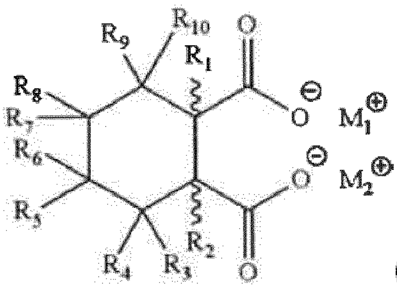

(II)

dans laquelle $M_1$ et $M_2$ sont identiques ou différents, et peuvent être combinés en un cation et sont choisis parmi au moins un cation métallique de calcium, de strontium, de lithium et d'aluminium monobasique ; et dans laquelle $R_1$, $R_2$, $R_3$, $R_4$, $R_5$, $R_6$, $R_7$, $R_8$, $R_9$ et $R_{10}$ sont identiques ou différents et sont individuellement choisis dans le groupe constitué par d'hydrogène, des alkyles en $C_1$ - $C_9$, hydroxy, alcoxy en $C_1$ - $C_9$, alkylènoxy en $C_1$ - $C_9$, amine et alkylamine en $C_1$ - $C_9$, halogènes et phényle,
et leurs combinaisons,
dans laquelle l'argile d'aluminosilicate est une argile nanotubulaire d'halloysite naturelle et dans laquelle la quantité de l'argile d'aluminosilicate est de 0,005 à 0,45 % en poids par rapport à la composition totale.

2. Composition selon l'une quelconque des revendications précédentes, dans laquelle l'agent de nucléation organique est un sel de Ca d'acide hexahydrophtalique.

3. Composition selon l'une quelconque des revendications précédentes, dans laquelle la quantité de la composition de nucléation dans la composition de propylène est de 0,01 à 0,5 % en poids.

4. Composition selon l'une quelconque des revendications précédentes, dans laquelle la quantité d'agent de nucléation organique par rapport au poids total de l'argile d'aluminosilicate et de l'agent de nucléation organique est de 1 à 30 % en poids.

5. Composition selon l'une quelconque des revendications précédentes, dans laquelle la quantité de l'agent de nucléation organique dans la composition est de 0,001 à 0,1 % en poids par rapport à la composition totale.

6. Composition selon l'une quelconque des revendications précédentes, dans laquelle le polymère à base de polypropylène est un copolymère de propylène hétérophasique constitué de

(a) une matrice à base de propylène,
dans laquelle la matrice à base de propylène est constituée d'un homopolymère de propylène et/ou d'un copolymère propylène-α-oléfine constitué d'au moins 70 % en poids de propylène et au plus de 30 % d'a-oléfine, sur la base du poids total de la matrice à base de propylène et dans laquelle la matrice à base de propylène

est présente en une quantité de 60 à 95 % en poids sur la base du copolymère de propylène hétérophasique total et

(b) un copolymère éthylène-α-oléfine dispersé,

dans laquelle le copolymère éthylène-α-oléfine dispersé est présent en une quantité de 40 à 5 % en poids sur la base du copolymère de propylène hétérophasique total et dans laquelle la somme de la quantité totale de la matrice à base de propylène et de la quantité totale du copolymère éthylène-α-oléfine dispersé dans le copolymère de propylène hétérophasique est de 100 % en poids.

**7.** Composition selon l'une quelconque des revendications précédentes, dans laquelle l'a-oléfine dans le copolymère propylène-α-oléfine est choisie dans le groupe des α-oléfines ayant 2 ou 4 à 10 atomes de carbone, par exemple l'éthylène, le 1-butène, le 1-pentène, le 4-méthyl-1-pentène, le 1-hexène, le 1-heptène ou le 1-octène, de préférence l'éthylène.

**8.** Composition selon l'une quelconque des revendications précédentes, dans laquelle la composition a un débit à chaud de 10 à 50 dg/minute (ISO 1133, 230 °C, 2,16 kg).

**9.** Procédé de préparation de la composition selon l'une quelconque des revendications précédentes, comprenant le mélange à chaud du polymère à base de polypropylène et de la composition de nucléation.

**10.** Article comprenant la composition selon l'une quelconque des revendications 1 à 8.

**11.** Article selon la revendication 10, dans lequel l'article est une application de consommateur telle que les boîtiers pour appareils électroménagers telles que les intérieurs de réfrigérateur, les barils de machine à laver et les outils électriques de jardin.

**12.** Article selon la revendication 10 ou 11, dans lequel l'article a une résistance au choc Izod d'au moins 45 kJ/m2 telle que déterminée selon la norme ASTM D256 et un module de flexion d'au moins 1200 MPa tel que déterminé par la norme ASTM D790.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014058521 A
- WO 2014202604 A
- JP 2008222806 B
- WO 2012061041 A
- WO 06010414 A
- US 4399054 A
- US 4472524 A
- WO 152061041 A
- EP 2599829 A
- US 4282076 A
- EP 0063654 A


### Non-patent literature cited in the description


- *Polym. Adv. Technol.,* 2007, vol. 18, 685-695
- Polypropylene and other Polyolefins. **SER VAN DER VEN.** Studies in Polymer Science. Elsevier, 1990, 7